# EUROPEAN PATENT APPLICATION

(11) **EP 0 527 639 A2**
(43) Date of publication of application: **17.02.1993**
(21) Application number: 92307348.0
(22) Date of filing: 11.08.1992
(51) Int. Cl.: G07F 19/00, G06F 15/30

(54) **Home financial transaction system**

(30) Priority: 14.08.1991 US 744909
(71) Applicant: U.S. ORDER, INC., Herndon, Virginia 22071 (US)
(72) Inventor: Gorog, William F., McLean, Virginia 22102 (US)
(74) Representative: Boydell, John Christopher

(57) **Abstract**

A Home Financial Transaction System (HFT) is described comprising financial transaction terminals (FTT) with means to read symbolic representations of data which identify merchant/service provider, method of payment, amount of payment and type of transaction to be conducted. The FTT user scans an optical reader means (1) over the symbolic representation on a bill or invoice and stores the information relating to the amount to be paid, method to be paid and related information in the memory (7) of the (FTT). Once all transactions have been stored, the terminal (FTT) communicates with a financial transaction computer system (FTCS) which assembles data from a plurality of terminals (FTT) for subsequent transmission to banks and other financial institutions for clearing house operations. Symbolic representations can be imprinted on bills or invoices or imprinted on separate data sheets which can be scanned by an optical scanning means to input the desired identification data. One enhancement also calls for transaction codes to be symbolically represented and input by the optical scanning means to conduct the desired transaction.

## Description

### BACKGROUND OF THE INVENTION

### Field of the Invention

This invention relates generally to an invoice, statement, and bill payment system and more specifically to electronic communication of payments from a billpayer to the company requesting payment and the execution of other financial transactions from a home system. These are collectively referred to as "financial transactions."

The originality of the invention lies in the integration of existing devices, products, and networks to accomplish a unique service which will make home financial transactions significantly more efficient and cost effective. By using the electronic communication technologies and the electronic input system described, this invention will allow the general public as well as companies and institutions to rapidly transfer funds among accounts as well as from their own bank accounts to the account of the bill sender using electronic funds transfer techniques.

### Background

The ability to electronically pay bills and transfer funds from credit cards has been the subject of various technology development. Patent No. 4,689,478 to William J. Hale, et al. describes a system for handling data that relates to bill payments, credit transactions, point of sale debit payments, and related data and information embodied in a portable unit.

However, the Hale unit must connect to an interface module which must be present at point of sale locations, ATMs, or a personal computer if the transaction is to be conducted over the telephone. This places a burden on the home user, the store at the point of sale or the ATM machines to have a compatible interface module into which the portable terminal can be inserted.

It is important to note that the Hale invention does not address any form of electronic or graphic input as a means of designating the bill to be paid or the amount of the transaction. As such, it differs from the proposed invention which relies heavily upon such graphic input.

Patent No. 3,970,992 to William A. Boothroyd et al. describes an automated teller machine ("ATM") which interacts with credit cards in the typical fashion for payment of credit card invoices and offers banking functions. It does not contemplate payment of bills other than credit cards nor is it the kind of terminal that one would have at home.

Patent No. 4,319,336 to Robert W. Anderson et al. describes an improvement in ATM technology and describes an improved ATM whose keyboard can be customized for various financial transactions. This invention relates to an ATM that is used in conjunction with banks. There is no contemplation of the invention for home use nor is portability addressed. Input is via conventional keyboard entry.

Patent No. 4,454,414 issued to William M. Benton describes a system that relates to ATM technology and includes the concept of a small portable terminal that can be used by an authorized individual to electronically conduct financial transactions at locations having similar portable terminals. However such transactions can only be conducted where another such portable terminal is present or where an ATM has been retrofitted with appropriate equipment to couple to the portable terminal.

Patent No. 4,277,837 to Paul E. Stuckert describes a portable terminal that accepts credit cards. The portable terminal must be taken to various point of sale locations or financial terminals, such as ATMs, and physically connected to a compatible terminal. It cannot be used away from the point of sale or transaction by the consumer for payment of bills and conduct of other financial transactions

Patent No. 4,321,672 to Edward L. Braun et al. relates to an improvement in ATM technology and describes an alternative method of processing financial information relating to payment of bills and other financial transactions without the necessity of passing large numbers of checks through a variety of clearing houses and banks. This system does not contemplate the universal use by consumers at locations remote from the various ATMs contemplated by the invention. Thus the user would still have to pay bills at various locations other than his or her own home.

Patent No. 4,341,951 to William M. Benton describes a portable electronic device used in lieu of cash by a consumer to conduct financial transaction such as bill payment, purchases of goods and services. A paper voucher is imprinted by the electronic device with graphical, machine readable information relating to the amount of the transaction. The amount of the transaction is then subtracted from the memory of the portable terminal thereby decreasing the financial balance of funds available in the portable terminal. The financial information that is graphically imprinted on the paper voucher is used by the financial institution or the merchant in subsequent processing to have its account credited with the amount of the financial transaction. This invention requires that the portable terminal be actually brought to the point of the financial transaction (i.e. the ATM or the point of sale).

All of the above devices 1) must be either taken to the point of a financial transaction, 2) are non-portable ATM technology related generally or 3) require special interface units in order to communicate with a subsequent computer or database. Further, none of these devices address the issue of fast and accurate input of bill payment information. Data for all these devices is entered via conventional keyboard entry.

### SUMMARY OF THE INVENTION

The Home Financial Transaction System ("HFTS") of this invention allows the general public, companies, banks, brokerage firms, and financial institutions to rapidly transfer funds among their individual accounts (savings, checking, credit cards) and accounts of a merchant/service providers "financial transactions") in a faster and more cost effective manner than currently available via check payment and clearing procedures. The present invention reduces the level of effort and expense presently required to issue and mail checks and receive and process the payments. In addition, the system greatly speeds up the receipt of funds by eliminating the delay caused by postal transfers.

It is a further objective of this invention to provide a financial transaction process and apparatus that can be used by a consumer at any location remote from both financial institution and a merchant/service provider to transfer funds among accounts, to pay bills of vendors, service providers and all manner of creditors to access their accounts for information ("account inquiry") and where applicable to add funds to "value" or "cash" cards (i.e., those forms of credit cards that have ascertain dollar value that declines as purchases are made).

It is a further objective of this invention to provide a financial transaction process and apparatus that requires only that a consumer use a single portable unit coupled together with normal telephones, without other interface hardware, in order to effect such financial transactions.

It is a further objective of this invention to provide a financial transaction process and apparatus that uses graphical symbols or "symbolic representations" representing payment or amount, account and other information that can be manually input, or optically, electronically and/or magnetically scanned to rapidly input payment or amount information, financial institution, identification of payee and other information relevant to the desired financial transaction.

It is also an objective of the present invention to provide a capability for a user to update information in the central computer system relating to changes in a user's profile (e.g., address, account number, etc.).

The HFTS comprises three major components:
(a) A Financial Transaction Computer System ("FTCS") with the processing and storage capacity necessary to allow input and output communications with Financial Transaction Terminals (described below) and the necessary software systems to accomplish electronic funds transfer from bill payers' accounts to the accounts of the bill senders or merchant/service providers.
(b) An identification system that comprises graphical or other encoding symbols ("symbolic representations") that identify the financial accounts, amounts or, in the case of bill payment, bill sender or merchant/service provider and the amounts due that are presented to the bill payer via special graphic or other coding on the bills, invoices, or statements. This information may also be presented to the user via separate "data sheet" means on which are printed the symbolic representations identifying the entity to which payment is to be made.
(c) A Financial Transaction ("FTT") Terminal with means to input amount or payment information manually, optically, magnetically, electronically, orally, and manually including identification of the consumer's accounts, the identification of the merchant/service provider sending a bill and the amount the consumer wishes to transmit to the account of the bill sender or to a value card. The user can also designate via the FTT the date on which the consumer wishes to have a given bill paid. In addition, the FTT possesses a read/write card input means and has the necessary software and communications capability allowing storage of account information of the sender, processing of coded information on the bills, invoices, or statements, and transmission of the data to the Financial Transaction Computer System.

The FTCS can send data to or receive data from a plurality of FTTs or from other computer systems at other financial institutions This data can be sent or received over normal telephone lines, radio links, satellite communications systems, or any other communication systems normally utilized for transmission of computerized data.

The FTCS has various software programs that (among other things) allow the payment information to be accepted from the FTTs, determines the address or routing for the transaction, assembles the transaction information and periodically sends the transaction information to the appropriate financial institutions for reconciliation. Upon completion of the transaction, the FTCS will retain records of the transaction which can be accessed electronically by the consumer or the merchant/service provider or which can be transmitted in printed or electronic form for record keeping purposes.

The FTT comprises data entry and storage and communications capabilities for use by the general public, companies, and institutions. The user enters data which identifies the user, after which the user's financial institution, the user's account number(s), etc. are identified via a unique file for that particular user stored in the FTCS. The Bill is next identified, after which the merchant/service provider financial institution, the merchant/service provider account information, etc. are identified via a unique file for that particular Bill Sender stored in the FTCS. Finally, the amount the user wishes to have transferred to the account of the Bill Sender or value card is identified by the user. This data is stored by the FTT until such time as the Bill Payer has entered all transactions to be transmitted to the Financial Institution Computer System. At that time the FTT transmits the stored data at computer speeds via packet switching, broadcasting over radio frequencies or other high speed communications means to the Financial Institution Computer for processing. The data entry to the FTT is accomplished by entering the data using an optical reader which is manually scanned over identification codes on the bills invoice, statement or data entry sheet. These documents will contain symbolic representations identify the, merchant/service provider amount due and method of payment.

In an alternative embodiment, these various symbolic representations can reside on a "data entry sheet" comprising the names of merchant/service provider and related information, together with the symbolic representations for that information. Such a data entry sheet may be necessary until merchant/service providers fully integrate coded symbology on their invoices.

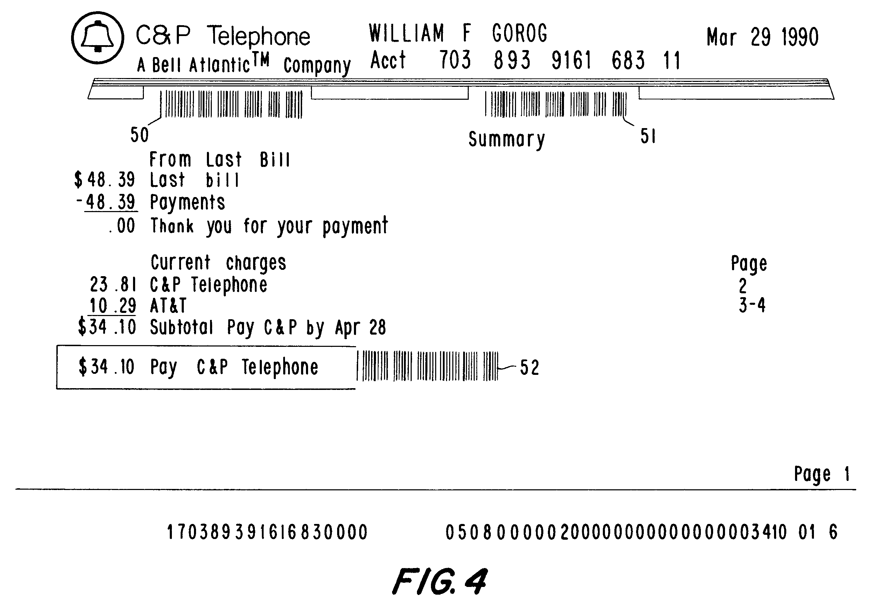

This symbolic representation approach is also used to depict certain actions relating to financial transactions desired by a user. For example, an "action code" or symbolic representation will exist for "transferring funds", "bill payment", "account inquiry" and other transactions of a financial nature (see figure 4b). In this manner, when a user wishes to pay a bill, he merely "scans" the symbolic representation of that transaction. Thereafter the FTT software prompts the user through the transaction.

It should be noted that a Universal Product Code ("UPC") type formate is depicted for the symbolic representation. This should not be construed to limit the type of symbolic representation contemplated by the present invention since quasi-numerical representations also exist which can be scanned optically to input the same information. The term "symbolic representation" is used throughout to designate all such graphic methods of representing data and information.

Information can also be entered manually via a key pad or orally via a voice recognition capability embodied in the FTT, which capability converts the human voice into digital data. The FTT also has the capability to read magnetic stripes, microchips, and optical storage media that are incorporated in credit or debit cards using a plurality of means embodied in the FTT.

### Brief Description of the Drawings

- Figure 1.: The financial transaction terminal
- Figure 2.: The financial transaction computer system
- Figure 3.: The financial transaction terminal flow diagram
- Figure 3a.: The financial transaction terminal flow diagram (continued)
- Figure 4.: Modified bill/invoice
- Figure 4a.: Symbolic representation data sheet
- Figure 4b.: Action code data sheet
- Figure 5.: Financial transaction computer system flow diagram

### Detailed Description of the Invention

The Home Financial Transaction System allows a consumer to pay bills, invoices, or statements, transmit account inquiries and/or transfer funds to a Bill Sender or value card through use of a FTT that interacts with identification codes on a data entry sheet or on the bills themselves, invoices, or statements that specifically identifies the Bill Sender, the Bill Sender's Financial Institution and the amount to be paid to the Bill Sender. The FTT allows rapid entry of the information from multiple bills, invoices, or statements or from a data entry sheet and provides means for storage of this information in the FTT.

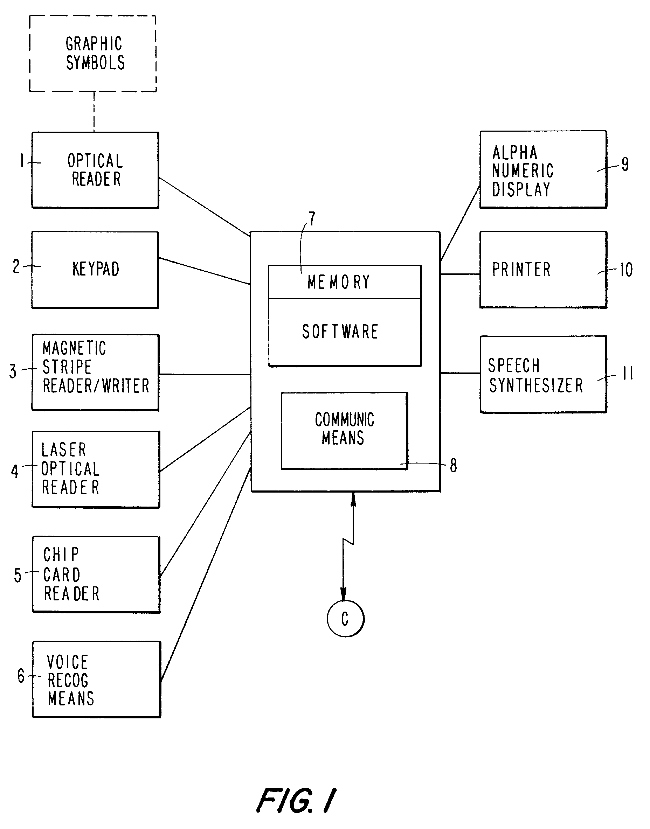

Referring to Figure 1, the FTT consists of an optical reader **[1]** that a Bill Payer scans across graphic symbols **[12]** that appear on a data entry sheet or on the bills, invoices, or statements sent by the Bill Sender or delivered through other means to the bill payer. These symbols identify the company sending the bills and the amount to be remitted to the Bill Sender. Information sensed by the optical reader is placed in the FTT memory **[7]**.

The FTT comprises an alpha numeric key pad **[2]** by which a user can enter data when necessary and which contains a key for initiating the payment process.

The FTT also contains a magnetic reading and writing capability **[3]** that allows a user to input the magnetic stripe on a credit or debit card to directly input the information contained therein to the terminal's memory for subsequent transfer to the Financial Institution Computer System and by which information can be written to a cash card to add funds to the card. In this manner data defining the consumer identity and account can be rapidly entered into the terminal.

The FTT also comprises a laser optical reader **[4]** that optically reads stored data that may be present on a credit or debit card. Such optical data may contain Bill Payer and other identifying data.

The FTT may also contain means to read/write data stored in microchips embedded in credit or debit cards **[5]**. Data contained in the microchips may also contain consumer and other information necessary to complete the payment procedures.

The FTT may also contain means to recognize the speech of an individual in order to enter data orally **[6]** for persons who may be unable to manually use other means of input.

The FTT also has an alphanumeric display **[9]** that informs the user that the terminal is operating correctly and provides means for prompting the users and providing information relating to communications with the FTCS. Such information may also be printed via an accompanying printer accessory **[10]** or communicated to the user via an integral speech synthesizing means **[11]**.

Finally, the FTT comprises both a memory capability and a capability to execute preprogrammed software **[7]**, including encryption software, or firmware. This capability allows the FTT to store the instructions necessary to allow the terminal to interact with the user and the Financial Transaction Computer System and to add further security to the financial transaction. Further, the memory capability allows the FTT to store information presented to it by the optical reader, the key pad, the voice recognition system, the microchip reader, or the magnetic stripe reader which information relates to user identification data and to the information presented by the merchant/service provider including Bill Sender identification data and amounts of funds to be transferred.

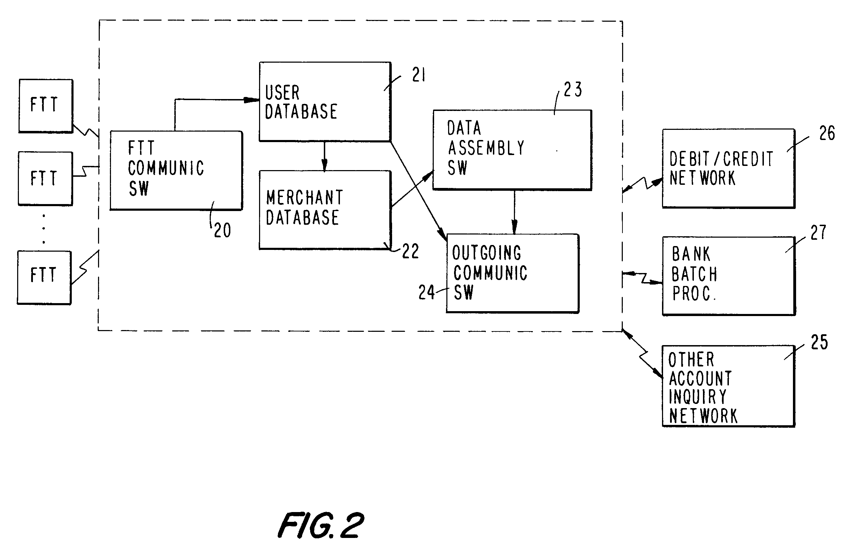

Referring to Figure 2 the FTCS is shown (within the dashed line). The FTCS comprises communication software **[20]** for communication with FTTs, an FTT user database **[21]** comprising information including user bank information and personal identification number ("PIN") and a merchant/service provider database **[22]** comprising financial routing information relating to the merchant/service providers including bank and account numbers and customer identification number if applicable. The FTCS further comprises software that assembles the financial transaction and related credit/debit information **[23]** from a plurality FTT's for subsequent transmission to banks for clearing house operations. The FTCS assembling software **[23]** allows the FTCS to process incoming FTT information and to assemble such information into a format compatible with financial institutions which can then further process the transaction to comply with the Federal Reserve system. This batched FTT information is then provided to the FTCS outgoing communications software **[24]** for subsequent transmission to the appropriate financial institutions or networks. The FTCS out-going communication software **[24]** to handle communications with the user-bank inquiries **[25]**, and online debit/credit networks **[26]** and bank batch processing of financial transactions **[27]**.

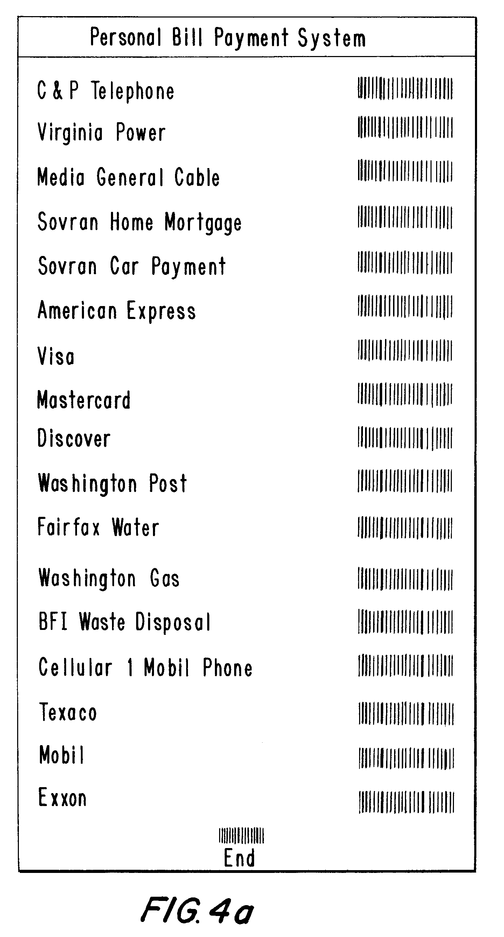

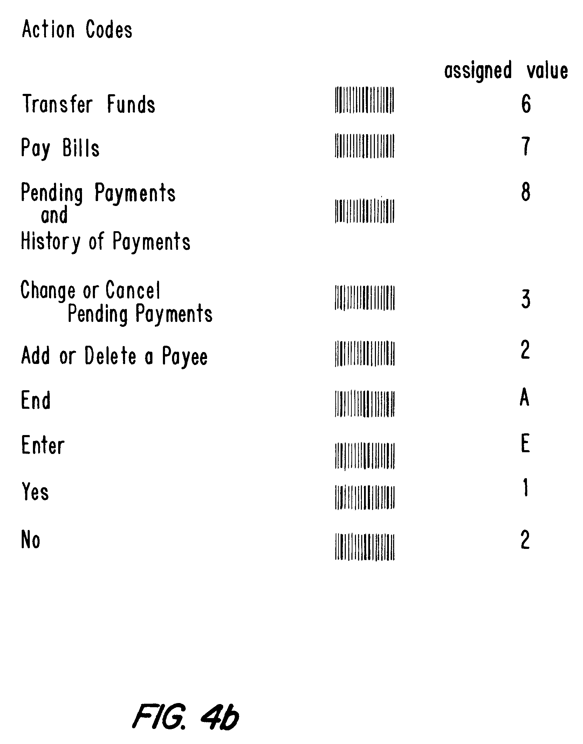

Referring to figure 4, a modified bill of the type anticipated by the invention is shown. Bills and invoices that utilize the invention are modified to contain symbolic representations that depict the identity of the bill sender **[50]** and bill payer **[51]**, and the amount of the bill **[52]**. Account numbers and account routing information are stored in the FTCS as files uniquely associated with the merchant/service provider together with any user identification numbers required by the merchant/service provider. The symbolic representations are placed or identified so that the user of the FTT can readily identify which symbols stands for which data element. Using the optical scanning means of the FTT, the user scans the appropriate symbol representation in response to prompts from the FTT internal software. This information is then stored for later transmission by the user upon the completion of the bill payment session.

Figure 4a represents an alternate approach to entering such information using a data sheet. In lieu of the symbolic representation being placed on the invoice, a data sheet(s) is provided to the user which depicts the identification code or symbol of the bill sender. Amount of payment may be entered via the keypad of the FTT or via scanning "amount" symbols on a data sheet similarly formatted (not shown).

Referring to figure 4b an "Action Code" data sheet is shown. Using the present invention, the user can scan the symbol for the transaction desired (eg. "pay bills" "transfer funds", etc.). This provides as simplified method of conducting the desired transaction. The FTT recognizes the action code and via internal software prompts the user through the transaction.

It can also be seen by those skilled in the art, that the present invention can also be used to update information in the database of a given user. For example, if the billing address changes or account numbers for charge cards are desired to be added by a user, a simple interaction function can be present in the FTT to request the information necessary and update the user database in the FTCS.

### HOW TO USE

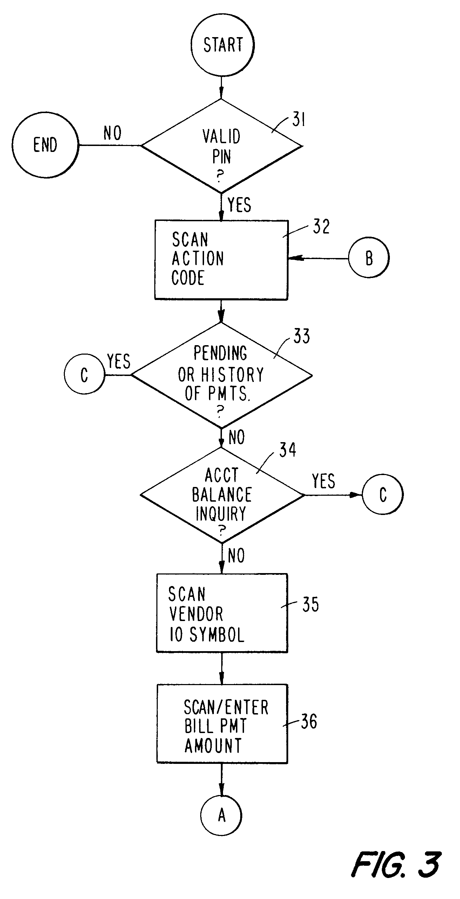

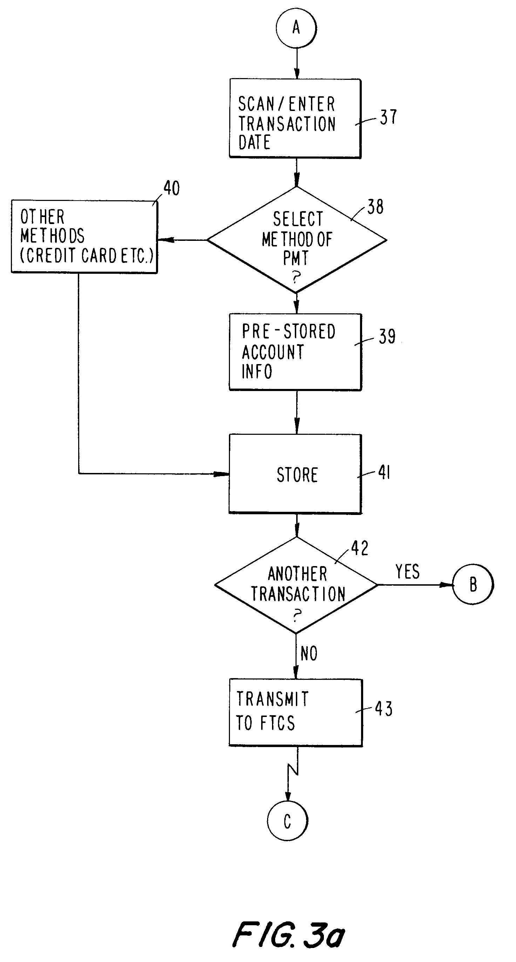

Referring to Figure 3, when a user wants to pay a particular bill for products or services rendered the user activates the FTT. The user is then prompted through a series of steps that are displayed on the FTT display screen. These steps include but are not necessarily limited to the following:
1. Activate the FTT.
2. Enter the user personal identification number ("PIN"). If the PIN is valid **[31]** the session can continue.
3. Scan the Action Code **[32]** to select the type of financial transaction desired.
   (Note: At this point the FTT determines if the Action Code scanned requires interface with an outside network. Specifically, the Action code to obtain a history of payments made or pending **[33]** will cause the FTT to prompt the user to connect to the FTCS for the desired information. Similarly if account balance inquiry is desired from a bank **[34]**, the FTT will prompt the user to connect to the FTCS which in turn will connect to the appropriate on-line network **[51]**.
4. Scan the optical reader over the vendor identification code **[35]** which identifies the account to be credited.
5. Scan the optical reader over the amount of the bill or debit, or enter the amount to be paid, transferred, etc., via the FTT Keypad **[36]**.

Referring to figure 3a, the transaction process description continues.
6. Scan/Enter the transaction date **[37]**. This allows the user to have payment made on a present or future date.
7. Enter the method of payment **[38]**, either via prestored account information **[39]** or other credit card methods **[40]**.
8. If payment is by credit card, slide the credit card through the credit card reading means. The FTT will then read the user information from the magnetic stripe, optical storage media, or microchip from the credit card in use. It is an objective of this invention to provide a means of reading all forms of credit cards, debit cards and value or cash cards and to be able to write to such cash or value cards. If payment is to occur via a debit from an existing checking or savings account such information may be indicated via action codes, via keys on the FTT keypad, or via scanning graphic codes indicative of the bank and account number desired by the user to be debited.
9. This completed transaction is then stored **[41]**.
10. This user can elect to conduct another transaction **[42]** by using the preceding steps, entering the information for the next transaction to be conducted or signify to the FTT that the financial transaction is completed by scanning an "end" code.
11. When the bill payment procedure is completed, the user activates the communications capability of the FTT **[43]** by causing the FTT to be connected to a telephone system or other transmission medium and pressing an "enter" key or scanning an enter code. At this point the FTT will dial a pre-programmed telephone number and transmit the payment information to the FTCS. This information concerning the multiple bills to be paid or transactions conducted is transmitted to the FTCS **[43]**.

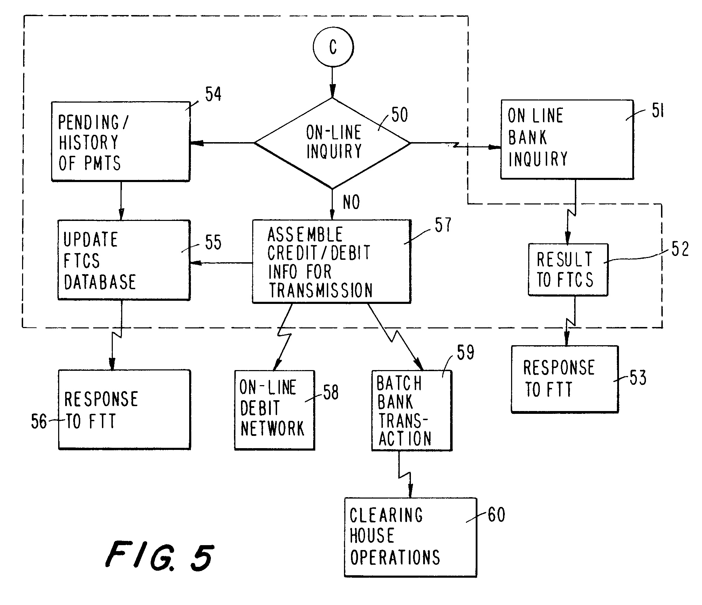

Referring to figure 5, the FTCS operations are described.
12. The FTCS receives the information from the FTT and verifies that the FTT user is authorized to conduct financial transactions via the system. The FTCS accepts the transaction information and first determines if an online inquiry is requested **[50]**. If an inquiry to an outside bank is requested, the FTCS establishes communications with the outside bank **[51]**, performs the desire inquiry and receives the results back from the bank **[52]**. The FTCS then transmits the information to the FTT **[53]**. If an inquiry regarding payment history or pending payments is desired **[54]** the FTCS queries the user database of such information **[55]** and transmits the response to the FTT **[56]**.
13. If payments are to be made by a user the FTCS stores the information for subsequent transmission to a banking institution.
14. The FTCS assembles the payment/debit/credit transactions from the many FTT's in an appropriate format for transmission to various financial institutions **[57]**.
15. At the close of each business day or at specified times during the day, the FTCS electronically transmits to various banks, the transactions conducted by users **[58, 59]**, including merchants account numbers and all payments from consumers that are applied to bills sent by each individual merchant. This information is transmitted to the merchants' bank using the financial routing information provided by the merchant to the FTCS. Thereafter, the electronic payments against checking accounts or against credit cards are cleared in the normal fashion **[60]**. If a particular consumer has insufficient funds to make the payment designated by the consumer, the consumer's bank will so notify the merchants bank whereupon the procedure for "insufficient funds" or "insufficient credit" is followed by the bank.

While a "consumer"use of the HFTS has been described, the invention clearly can be used by businesses as well as individuals to pay bill and/or to transfer funds among personal or business accounts.

As can be seen from the preceding description, a flexible Home Financial Transaction System is described. While certain methods of data input via symbolic representation has been described, many types of graphical symbols or quasi letter/number representations may also be used to identify payor/payee amount, financial institutions, without departing from the spirit of the invention.

## Claims

1. In a home financial transaction system, a method of paying for products or services, transferring funds, and transmitting account inquiries while remote from a financial institution or merchant/service provider, the method comprising the steps of:
inputting merchant/service provider identification information and bill amount information via a financial transaction terminal in order to identify a merchant/service provider and order bill amount, the input unit being located remote from a banking institution or merchant/service provider;
storing said merchant/service provider identification information and bill amount information in said financial transaction terminal;
inputting user payment/credit information using said financial transaction terminal;
storing said payment/credit information in said financial transaction terminal;
transmitting the stored merchant/service provider identification information, user payment/credit information, and bill amount information to a financial transaction computer system; and
processing the transmitted merchant/service provided identification information, bill amount information, and user payment/credit information from a plurality of said financial transaction terminals in said financial transaction computer system to permit subsequent transmission to banks for electronic transfer of funds and crediting of accounts in a normal fashion.

2. The method of claim 1 wherein the step of inputting the merchant/service provider identification information and bill amount information comprises the step of scanning an optical reader over symbolic representations on bills, invoices, or data sheets to obtain the merchant/service provider identification information and bill amount information, the step of inputting the merchant/service provider identification information and bill amount information by way of a keypad, or the step of converting speech input from a user of the system into the merchant/service provider identification information and bill amount information through the use of a voice recognition system.

3. The method of claim 2 wherein the step of inputting the payment/credit information includes the step of reading a magnetic stripe on a credit card, the step of reading the payment/credit information from a microchip imbedded on a credit card, or the step of optically reading the payment/credit information from a credit card.

4. The method of claim 2 further including the step of generating an audible announcement of the speech input information from a speech synthesizer connected to the input unit to confirm the original input information.

5. The method of claim 3 wherein the financial transaction terminal transmits the user payment/credit information to a financial transaction computer system for processing, comprising the substeps of:
transmitting the user payment/credit information from the financial transaction terminal to the financial transaction computer system together with the merchant/service provider identification information and bill amount information;
identifying the financial account routing associated with the merchant/service provider from a data base of such information stored in the financial transaction computer system; and
transmitting the user payment/credit information together with the merchant/service provider financial routing to a bank for financial transaction clearing operations;

6. A home financial transaction system comprising:
at least one financial transaction terminal for paying bills from merchant/service providers and for inputting user payment/credit information, the financial transaction terminal being located remote from both the financial institution of the user and the merchant/service provider, said home financial transaction terminal further comprising an input device for reading merchant/service provider identification information and bill payment information identifying the merchant/service provider and the amount of the bill to be paid;
a credit card information reader for inputting credit information for a user of said financial transaction terminal;
memory capacity, coupled to the input device and the credit card information reader, for storing the merchant/service provider identification information, bill payment information, and user payment/credit information;
a communication subsystem, coupled to the memory capacity, for transmitting the store merchant/service provider identification information, bill payment information, and user credit/payment information to a financial transaction computer; and
a financial transaction computer coupled to and located remote from the financial transaction terminal, for receiving information transmitted from said financial transaction terminal and for paying bills, the financial transaction computer comprising a communication module for receiving the merchant/service provider identification information and bill payment information and user credit/payment card information from said financial transaction terminal means;
an authentication subsystem for verifying that a user is authorized to make the bill payment;
financial transaction computer memory for storing the financial routing information relating to merchant/service providers and user information relating to financial transactions conducted and credit card and bank account number of users;
payment/credit communication capability for transmitting information between the financial transaction computer and banks for clearing house operations;
and capability for paying a bill according to the merchant/service provider identification information and bill payment information via financial institution clearing house operations.

7. The system of claim 6 wherein the financial transaction terminal includes an input device taken from the group comprising an optical scanner, a UPC reader, a keyboard, a voice recognition system, a display device, a printer, and a voice synthesizer, for inputting merchant/service provider identification information, amount of payment information, and user credit/payment information.

8. The system of claim 6 wherein the credit card information reader includes an input device taken from the group comprising a magnetic stripe reader, a microchip reader, and a laser optical reader.

9. The system of claim 6 further comprising an encrypter whereby data sent from the terminal is encrypted prior to transmission.

10. The system according to claim 7 further comprising data sheets comprising symbolic representations of merchant/service provider identification information and user credit/payment information, which are scanned by said optical scanner of the financial transaction terminal.
